# EUROPEAN PATENT APPLICATION

(11) **EP 1 602 907 A1**
(43) Date of publication of application: **07.12.2005**
(21) Application number: 04425396.1
(22) Date of filing: 31.05.2004
(51) Int. Cl.: G01L 19/04, G01L 1/22, G01D 3/02

(54) **Automatic sensor correction with feedback microprocessor**

(71) Applicant: Gefran Sensori S.r.l., 25050 Provaglio d'Iseo (Brescia) (IT)
(72) Inventor: Manessi, Mauro, c/o Gefran Sensori S.r.l., 25050 Provaglio d'Iseo Brescia (IT); Falletta, Giuseppe, c/o Gefran Sensori S.r.l., 25050 Provaglio d'Iseo Brescia (IT)
(74) Representative: Botti, Mario

(57) **Abstract**

The invention relates to an electronic circuit (1) for the automatic calibration of pressure sensor devices, of the type associated to a pressure sensor (S).

Advantageously such circuit comprises
- a signal amplifier (AMP) interposed between the pressure sensor (S) and the output terminal (N_{OUT}) of the circuit (1)
- a microprocessor (MC) connected to the pressure sensor (S) and to the output terminal (N_{OUT}) and receiving at the input a signal (S_{MC}) from an automatic data acquisition device (SIN) to automatically calibrate the sensor (S) by varying the electric power supply thereof or applying predetermined voltage values.

The invention relates also to an automatic calibration method of pressure sensors (S).

## Description

### Field of application

The present invention relates to an electronic circuit for the automatic calibration of pressure sensor devices.

The invention relates also to a method for calibrating a pressure sensor device of said type.

The invention relates particularly, but not exclusively, to an electronic circuit for the automatic calibration of pressure sensor devices, wherein the calibration occurs by means of digital signals and the following description is made with reference to this field of application for convenience of illustration only.

### Prior art

As it is well known, a sensor device detects a physical quantity or a variation thereof in a predetermined environment and turns it into another physical quantity, generally an electrical quantity, for processing in user devices.

In other words, and with non limiting reference to pressure sensor devices, a pressure sensor detects a value for the pressure exerted in a chamber, for example by a hydraulic cylinder, a press, a machine tool or the like and it turns it into an output signal, such as a voltage or current electric signal, for a user device. The user device may be a control loop for the opening of a water pipe gate valve, or an alarm signal emitting circuit for the detection of a pressure higher than the one permitted in a plant, etc.

The signal produced is conveniently amplified before being exploited in a user device.

The resulting amplified signal must be as much noise-free as possible for a correct transmission of the detected signal.

To this purpose, the sensor must be calibrated according to different configuration parameters and owing to the continuous variations of the output signals.

More precisely, sensor offset and gain values must be calibrated, thermal drift compensations and, if necessary, linearity corrections on the signals produced by the sensor, must be performed.

With reference thereto and hereafter in the description, a sensor "zero point" will mean a reference value, from which the input physical quantity is measured.

Moreover, the expression "thermal drifts" will mean the system temperature variations, which can causea zero point variation, which generates undesired variations in the circuit output values.

Moreover, "linearity errors" will mean the deviations between the real pattern of the sensor operation and the ideal pattern; such errors are expressed as a percentage of a value called "full scale", which represents the upper limit of the sensor measuring range. Linearity corrections are performed to minimize the linearity error.

A first known embodiment provides the control of two configuration parameters, the offset value and the sensor gain, by means of precision potentiometers, i.e. analogue trimmers.

Although advantageous under several aspects, this embodiment has several drawbacks.

For calibrating an analogue trimmer, the intervention of an operator is required; moreover, manual calibration of a trimmer is intrinsically subject to errors and inaccuracies and does not allow the circuit calibration performance to be stable in time.

Moreover, by using analogue trimmers, it is not possible to obtain linearised signals from the sensor.

A second known embodiment, instead, provides the use of digital circuits such as the so-called ASIC (Application Specific Integrated Circuit) or FPGA (Field-programmable gate array).

These circuits allow higher performance precision and stability in time compared to analogue trimmers, automatic calibration and they allow linearity corrections on the signals produced by the sensor.

Although advantageous for the mentioned aspects, these circuits also are not without drawbacks.

In fact, they are made to meet the technical requirements of particular and specific applications; they are thus purpose-made integrated circuits.

Consequently, the realisation has considerable costs, resulting convenient only for large-scale productions; the choice of ASIC and FPGA is thus not a good solution for limited-series productions.

The technical problem underlying the present invention is to provide a circuit for the automatic calibration of pressure sensors, having such structural and functional features as to be easily used in several and different applications and not realised for a particular application, overcoming the limitations of the circuits realised according to the prior art.

### Summary of the invention

The solution idea underlying the present invention is to use a microprocessor receiving calibration parameters and accordingly varying the sensor supply voltage or applying a predetermined voltage value, in order to enablean automatic calibration of the sensor.

Based on this solution idea, the technical problem is solved by a calibration circuit of the type previously indicated and defined in the characterising part of claim 1.

The problem is also solved by a calibration method of the type previously indicated and defined in the characterising part of claim 7.

The features and advantages of the device according to the invention will become apparent from the following description of an embodiment thereof given by way of an indicative and non limiting example with reference to the attached drawings.

### Brief description of the drawings

In such drawings:
- Figure 1 shows a diagram of an electronic circuit for the automatic calibration of pressure sensors, according to the present invention.
- Figure 2 to 4 show block diagrams of the method operative steps, according to the present invention.

### Detailed description

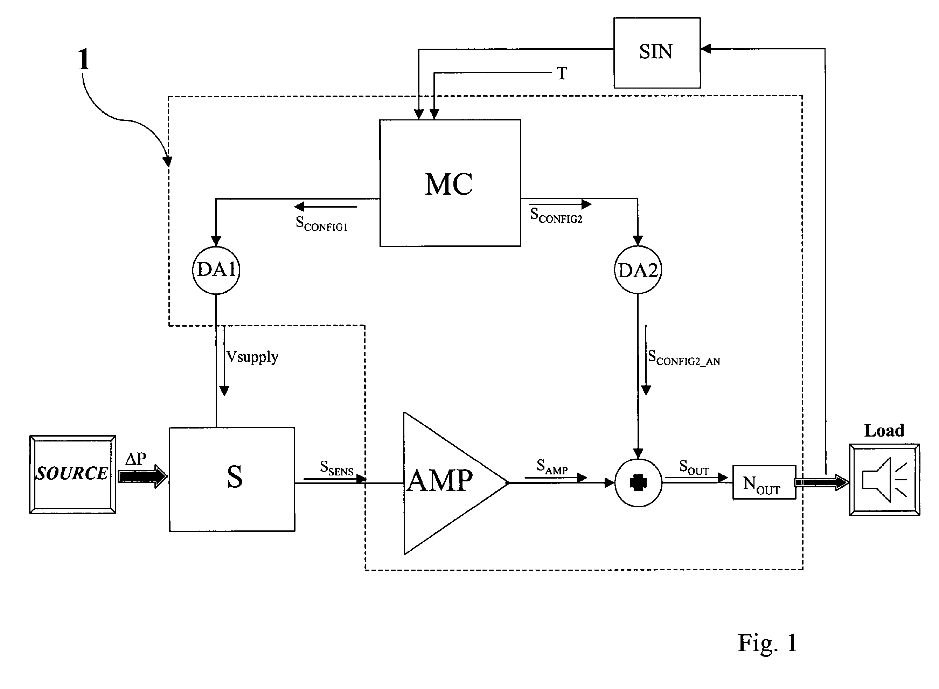

With reference to such figures, figure 1 shows an electronic circuit 1 realised according to the invention for the automatic calibration of pressure sensors.

In such figure, a pressure sensor/transductor S, usually but not exclusively realised by means of a membrane sensitive element and an associated Wheatstone bridge is installed in a measuring chamber SOURCE, wherein a pressure variation Δp occurs, generated, for example, by a hydraulic cylinder or a press or a machine tool, etc; such a sensor is described for example in US patent no. 6,450,038 by the same Applicant.

Such sensor S detects said pressure variation Δp and generates a corresponding signal S_{SENS}, typicallya voltage value to be amplified. The signal S_{SENS} is amplified by a signal amplifier AMP, cascade-connected with the sensor S outputting an amplified signal S_{AMP}.

Generally, an output signal S_{OUT} is emitted by the circuit 1 in correspondence with an output terminal N_{OUT}. The output signal S_{OUT} serves as output signal of the circuit 1 and as input signal of a user device LOAD.

Advantageously, according to the invention, the circuit 1 comprises a microprocessor MC.

Such microprocessor is interposed between the signal S and the output terminal N_{OUT}.

The microprocessor MC operates as a supervisor on an analogue chain comprising the sensor S and the amplifier AMP. Its purpose is to amplify the signal S_{SENS} coming from the sensor S, in order to output the high level signal S_{OUT}, typicallycomprised between 0 and 10 V in voltage and between 4 and 20 mA in current, to be supplied to the user device LOAD.

Advantageously, the microprocessor MC allows configuration parameter values of the circuit 1 to be automatically regulated; more precisely, it allows to
- calibrate the sensor S or, in other words, set the sensor offset and gain value;
- compensate the sensor S thermal drifts S;
- Compensate the sensor S linearity curves;

The regulation of said parameters occurs according to the values taken by the circuit output signal *S*_{*OUT*}, acquired by an automatic data acquisition device SIN, outside the sensor. Such automatic device is preferably, but not exclusively, interposed between the output terminal N_{OUT} of the circuit 1 and the microprocessor MC, it being possible however to implement it in the microprocessor MC itself. The device SIN receives at the input the output signal S_{OUT} of the circuit 1 and it emits a signal S_{MC} at the input of the microprocessor MC allowing the regulations to be performed.

Advantageously according to the invention, the microprocessor MC, serving as an interface between Nout and S, is thus apt to vary the sensor electric power supply, more particularly a supply voltage Vsupply of the sensor S so that the noise-free output signal S_{OUT} is generated.

Alternatively, the microprocessor MC is capable of applying predetermined voltage values to the sensor S.

Advantageously, according to the present invention, the regulation occurs without any manual calibration intervention by external operators.

Based on the information contained in the received signal S_{MC}, the microprocessor MC emits a first calibration signal S_{CONFIG1} and a second signal S_{CONFIG2}; the signal S_{CONFIG1} is applied at the input of the sensor S, in order to vary the supply voltage Vsupply thereof while the signal S_{CONFIG2} is applied at the input of an adder node ((+)) to regulate the value of the amplified signal S_{AMP}; the adder node ((+)) is inserted between the output of the signal amplifier AMP and the output terminal N_{OUT} of the circuit 1. This operation is performed only once in the factory when calibrating the device.

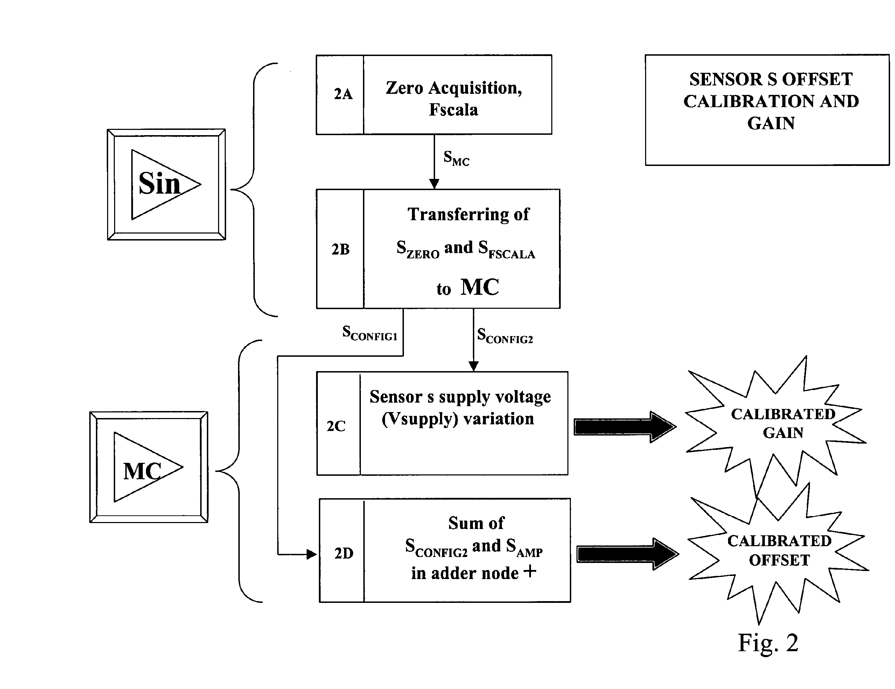

The steps of the calibration method of the sensor S according to the invention will now be described, with specific reference to figures 2, 3 and 4.

Figure 2 shows a block diagram of the various steps of the calibration method of the sensor S, which are realized by the calibration of the sensor offset and gain values, such values being calculated according to the value taken by the signal S_{OUT} outputted by the circuit 1 in the sensor S rest state and at the full scale value, respectively. The calibration operations are performed in an open loop by means of device SIN in the steps 2A and 2B and of the microprocessor MC in the steps 2C and 2D.

Initially, the sensor S is in the rest position; particularly, in pressure sensors, this results in the detection of a null pressure; under these conditions, as shown in the step 2A in the figure, the automatic detection device SIN acquires the output signal S_{OUT} from the circuit 1 representing the zero point of the sensor S.

The sensor S is then brought to the full scale value thereof and the automatic detection device SIN, still with reference to the step 2A in the figure, acquires the output signal SOUT from the circuit 1.

In the step 2B of the figure, the automatic detection device SIN transfers in series to the microprocessor MC, by means of the signal S_{MC}, the regulation coefficients of the zero and full scale signal represented by the values S_{ZERO} and S_{FSCALA}, respectively.

As shown in the step 2C of figure 2, the microprocessor MC operates on a supply voltage Vsupply of the sensor S by means of the signal S_{CONFIG1}; such signal is of the digital type, for example PWM and it varies according to the full scale coefficient S_{FSCALA} received by means of the signal S_{MC} by the microprocessor MC in the step 2b.

Before feeding said sensor S, the signal S_{CONFIG1} is converted, by means of a digital to analogue converter DA1, for example a filter in the case of the signal PWM, into the analogue supply signal Vsupply; particularly, but not exclusively, such supply signal is represented by a voltage.

Advantageously according to the invention, the microprocessor MC, operating on the supply voltage Vsupply of the sensor S calibrates the gain value of the sensor S.

Moreover, the microprocessor MC, as shown in the step 2D of the figure, operates on the adder node (+), by means of the signal S_{CONFIG2}; such signal also, like S_{CONFIG1}, is of the digital type, for example PWM , but it varies according to the zero coefficient S_{ZERO} received by means of the signal S_{MC}, by the microprocessor MC in the step 2B.

Before operating on the adder node (+), the signal S_{CONFIG1} is converted, by means of a digital to analogue converter DA2, for example a filter in the case of the signal PWM, into the analogue signal S_{CONFIG1_AN}.

Advantageously according to the invention, the microprocessor MC, adding a value S_{ZERO_ANALOG} of the signal S_{CONFIG2_AN} to the value S 1 of the amplified signal S_{AMP} outputted by the amplifier AMP, regulates the offset value S_{OFFSET} of the signal S_{OUT} outputted by the sensor S.

The steps 2A-2D previously described are performed only once in the factory when calibrating the sensor.

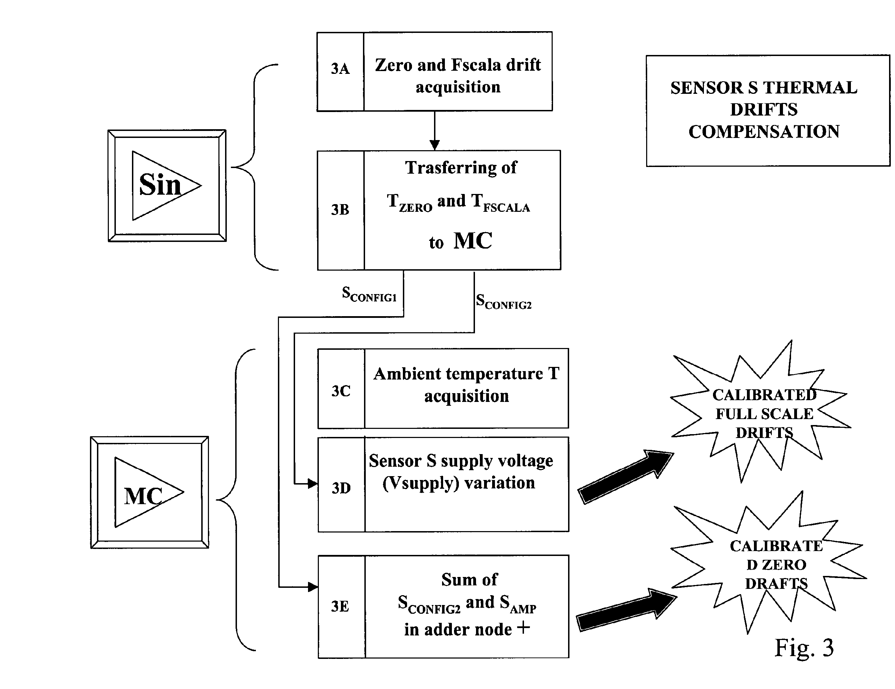

Figure 3 shows a block diagram of the various steps composing the thermal drift compensation operation of the sensor S.

This compensation is performed in open loop, in the steps 3A and 3B, by the automatic detection device SIN and, in the steps 3C to 3E by the microprocessor MC.

As described in the step 3A, the automatic detection device SIN acquires some values corresponding to the sensor zero and full-scale thermal drift.

In the step 3B of the figure, the automatic detection device SIN transfers to the microprocessor MC, by means of the signal S_{MC}, the compensation coefficients of the zero and full scale thermal drifts represented by the values T_{ZERO} and T_{FSCALA}, respectively.

During the normal operation thereof, the microprocessor MC recordsa temperature T typical of the environment wherein it is operating and, according to the detected temperature T value and to the values T_{ZERO} e T_{FSCALA} received in the step 3B, it performs regulation and compensation operations of the sensor S and of the circuit 1 in general.

As reported in the step 3D in figure 3, the microprocessor MC operates on the supply voltage Vsupply of the sensor S by means of the signal S_{CONFIG1}; such signal is of the digital type, for example PWM and it varies according to the value T_{FSCALA} received by means of the signal S_{MC} by the microprocessor MC in the step 3B.

Before feeding said sensor S, the signal S_{CONFIG1} is converted, by means of a digital to analogue converter DA1, for example a filter in the case of a signal PWM, into the analogue supply signal Vsupply.

Advantageously, according to the invention the variation of the supply voltage Vsupply of the sensor S allows the compensation of the full-scale thermal drifts.

Moreover, the microprocessor MC, as reported in the step 3E of the figure, operates on the adder node (+), by means of the digital signal S_{CONFIG2}, for example PWM, but it varies according to the zero value T_{ZERO} received by means of the signal S_{MC}, by the microprocessor MC in the step 2b.

Before actingon the adder node (mixer point) (+), the signal S_{CONFIG2} is converted, by means of a digital to analogue converter DA2, for example a filter in the case of a signal PWM, into the analogue signal S_{CONFIG2_AN}.

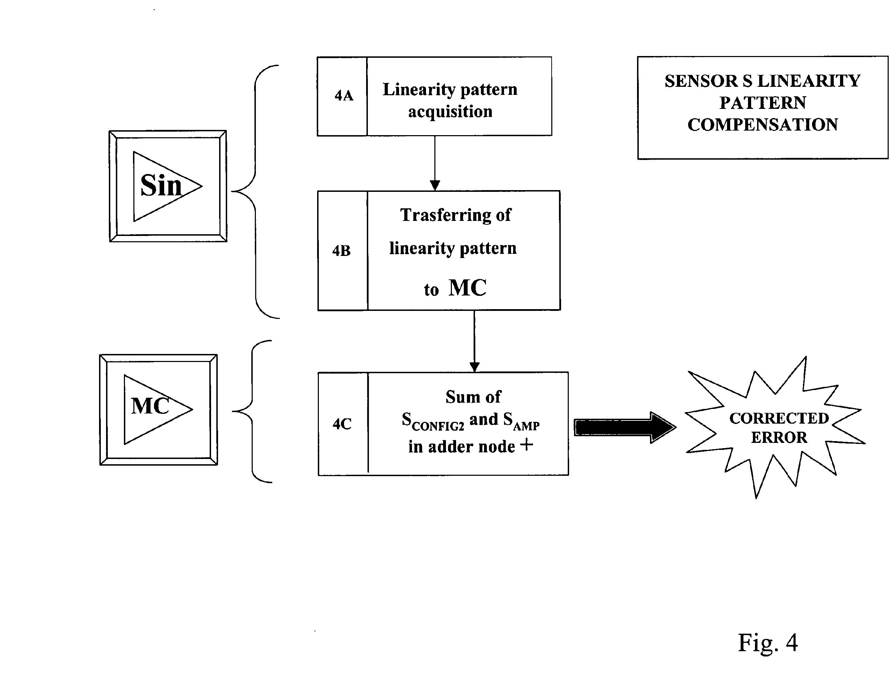

Advantageously, according to the invention, the microprocessor MC, by adding a value T_{ZERO_ANALOG} of the signal S_{CONFIG2_AN} to the value S2 of the amplified signal S_{AMP} outputted by the amplifier AMP, generates a value S_{DERZERO} of the signal S_{OUT} outputted by the sensor S, which compensates the zero drifts outputted by the sensor S. Figure 4 shows a block diagram of the various steps composing the compensation of the non linearity error operation of the sensor S.

In the steps 4A and 4B, such compensation is performed in a closed loop by means of the automatic detection device SIN, while in the steps 4C and 4D, still in a closed loop, it is performed by the microprocessor MC.

The compensation operation, as a whole, is performed with the sensor S operating, i.e. constantly during the operation.

As reported in the step 4A, the automatic detection device SIN acquires the real linearity pattern of the sensor S by comparing Sout with the output pattern of an ideal reference device.

In the step 4B of the figure, the automatic detection device SIN transfers to the microprocessor MC, by means of the signal S_{MC}, the correction coefficients of the detected pattern calculated according to the deviation between the real and the ideal pattern.

The microprocessor monitors the output signal S_{OUT} of the circuit 1 and it operates on the adder node (mixer point) (+), by means of the digital signal, for example PWM, S_{CONFIG2} , as reported in the step 4C; such signal varies according to the values taken by the ideal linearity pattern received by the microprocessor MC in the step 4B.

Before operating on the adder node (mixer point) (+), the signal S_{CONFIG2} is converted, by means of the digital to analogue converter DA2, for example a filter in the case of a signal PWM, into the analogue signal S_{CONFIG2_AN}.

Advantageously according to the invention, the microprocessor MC, by adding a value T_{ERR_LIN} of the signal S_{CONFIG2_AN} to the value S3 of the amplified signal S_{AMP} outputted by the amplifier AMP, generates a value T_{ERR} of the signal S_{OUT}, outputted by the sensor S, which compensates the linearity error of the sensor S.

In conclusion, the circuit with the microprocessor MC and the relative calibration method, according to the invention, allows the offset and gain values of a sensor to be automatically regulated , as well as the thermal drifts and the non linearity effects to be compensated.

These operations occur without any manual calibration intervention by external operators.

## Claims

1. An electronic circuit (1) for the automatic calibration of pressure sensor devices, of the type associated to a pressure sensor (S) for detecting pressure variations in a closed environment, **characterized in that** it comprises:
- a signal amplifier (AMP) inserted between said pressure sensor (S) and an output terminal (N_{OUT}) of said circuit (1);
- a microprocessor (MC) connected to said pressure sensor (S) and to said output terminal (N_{OUT}) and receiving at the input a signal (S_{MC}) from an automatic data acquisition device (SIN) to automatically calibrate said sensor (S) by varying the electric power supply thereof or applying predetermined voltage values.

2. A circuit according to claim 1, **characterized in that** it further comprises an adder node ((+)) at the output of said amplifier (AMP) and receiving a signal outputted by the microprocessor (MC).

3. A circuit according to claim 1 **characterized in that** said automatic data acquisition device (SIN) has input connected to said output terminal (N_{OUT}) and output connected to the input of the microprocessor (MC).

4. A circuit according to claim 1 **characterized in that** it comprises a digital to analogue converter (DA1), or a filter, interposed between said microprocessor (MC) and said sensor (S).

5. A circuit according to claim 2 **characterized in that** it comprises a digital to analogue converter (DA2), or a filter, interposed between said microprocessor (MC) and said adder node ((+)).

6. A circuit according to claim 1, wherein said electric power supply is a supply voltage (Vsupply).

7. An automatic calibration method of a pressure sensor (S) for detecting pressure variations in a closed environment, **characterized in that**:
- it provides an electronic calibration circuit (1) comprising a microprocessor (MC) connected to the sensor (S);
- it picks up an amplified electric signal (S_{OUT}) outputted by the sensor (S);
- it converts and transfers an input signal (S_{MC}) to the microprocessor (MC);
- it automatically calibrates said sensor (S) by varying the electric power supply thereof or applying predetermined voltage values.

8. Method according to claim 7 **characterized in that** the automatic calibration of the sensor (S) includes a calibration of the offset and gain values of said sensor (S).

9. Method according to claim 7, **characterized in that** the automatic calibration of the sensor (S) includes the steps of:
• acquiring by means of an automatic acquisition device (SIN), receiving at the input said electric signal (*S*_{*OUT*}), zero (S_{ZERO}) and full-scale (S_{FSCALA}) information of said sensor (S);
• transfering the information acquired by said acquisition device (SIN) to said microprocessor (MC);
• varying, by means of said microprocessor (MC), the supply voltage (Vsupply) of said sensor (S), by means of a digital signal (for example PWM) (S_{CONFIG1}) a function of said full-scale information (S_{FSCALA}), to calibrate the gain value of said sensor (S);
• adding in an adder node ((+)) a second signal PWM (S_{CONFIG2}), a function of said zero information (S_{ZERO}), with said amplified signal (S_{AMP}) to calibrate the offset value of said sensor (S).

10. Automatic calibration method of a pressure sensor (S) for detecting pressure variations in a closed environment, **characterized in that**:
- it provides an electronic calibration circuit (1) di calibrazione comprising a microprocessor (MC) connected to the sensor (S);
- it picks up an amplified electric signal (S_{OUT}) outputted by the sensor (S);
- it converts and transfers an input signal (S_{MC}) to the microprocessor (MC);
- it detects the temperature (T) of the sensor operating environment;
- it automatically calibrates said sensor (S) by varying the electric power supply thereof or applying predetermined voltage values, compensating the thermal drift thereof.

11. Automatic calibration method of a pressure sensor (S) for detecting pressure variations in a closed environment, **characterized in that**:
- it provides an electronic calibration circuit (1) comprising a microprocessor (MC) connected to the sensor (S);
- it constantly picks up an amplified electric signal (S_{OUT}) outputted by the sensor (S);
- it converts and transfers an input signal (S_{MC}) of the microprocessor (MC);
- it acquires data related to a sensor linearity pattern by means of an automatic data acquisition device (SIN);
- it automatically calibrates said sensor (S) by varying the electric power supply thereof or applying predetermined voltage values, compensating the linearity thereof.
